# EUROPEAN PATENT SPECIFICATION

(11) **EP 4 177 480 B1**
(45) Date of publication and mention of the grant of the patent: **28.02.2024**
(21) Application number: 21809892.9
(22) Date of filing: 25.10.2021
(51) Int. Cl.: F15B 13/02, F16K 11/00

(54) **CONVERSION DEVICE, BRAKING SYSTEM, AND TRAIN**
UMWANDLUNGSVORRICHTUNG, BREMSSYSTEM UND ZUG
DISPOSITIF DE CONVERSION, SYSTÈME DE FREINAGE ET TRAIN

(30) Priority: 24.09.2021 CN 202111123610
(43) Date of publication of application: 10.05.2023
(73) Proprietor: Meishan CRRC Brake Science & Technology Co., Ltd., Meishan City, Sichuan 620010 (CN)
(72) Inventor: LV, Chao, Meishan City, Sichuan 620010 (CN); XIAO, Chen, Meishan City, Sichuan 620010 (CN); NING, Bo, Meishan City, Sichuan 620010 (CN); SHEN, Yanfei, Meishan City, Sichuan 620010 (CN); YANG, Jianping, Meishan City, Sichuan 620010 (CN); YANG, Jinlong, Meishan City, Sichuan 620010 (CN); LI, Guo, Meishan City, Sichuan 620010 (CN); WANG, Kaien, Meishan City, Sichuan 620010 (CN)
(74) Representative: Locas, Davide
(86) International application number: PCT/CN2021/126187
(87) International publication number: WO 2023/045010

(56) References cited:
- EP-A2- 0 989 040
- CN-A- 103 189 249
- CN-A- 103 470 816
- CN-A- 104 358 925
- CN-A- 104 405 712
- CN-A- 104 482 245
- CN-A- 106 051 213
- CN-Y- 201 002 603
- DE-A1- 4 232 586
- US-A- 4 741 158
- US-A- 6 135 573

## Description

### Cross-reference to Related Application

The present invention claims the priority to the Chinese patent application with the filing No. 202111123610.7, filed on September 24, 2021 with the Chinese Patent Office, and entitled "Conversion Device, Braking System, and Train".

### Technical Field

The present invention relates to the field of trains, particularly to a conversion device, a braking system, and a train.

### Background Art

The trains are one of the important transportation means in the transportation system. The speed of braking force output of the braking system of the trains is closely related to the braking demand of the trains, and meanwhile also will affect the running of the trains. Generally, a conversion device is added to the braking system so as to adjust the braking force output of the braking system.

In the prior art, the structure of the conversion device is relatively complex.

### Summary

The present invention provides a conversion device, a braking system, and a train, which can make the structure compact and simple.

Embodiments of the present invention disclosure may be realized as follows

An embodiment of the present invention provides a conversion device, wherein the conversion device may include:
a vehicle body, wherein the valve body may be provided with a valve body air inlet path, a first valve body air outlet path, and a valve body passage;
a valve cover, wherein the valve cover may be rotatably mounted on the valve body; and the valve cover may be provided thereon with a first valve cover passage, a second valve cover passage, and a third valve cover passage; and
a first shrinkage member, wherein the first shrinkage member may be provided at a first port of the second valve cover passage,
the valve cover may be configured to be rotatable relative to the valve body, so as to be switched between a first mounting position and a second mounting position, wherein
in a situation that the valve cover is in the first mounting position, the valve body air inlet path, the first valve cover passage, the valve body passage, the second valve cover passage, and the first valve body air outlet path may be in communication in sequence, a first port of the second valve cover passage may be in communication with an air outlet end of the valve body passage, a second port of the second valve cover passage may be in communication with an air inlet end of the first valve body air outlet path; the first shrinkage member may be configured to slow down a gas in the valve body passage from entering the second valve cover passage, and two ports of the third valve cover passage may be configured to be blocked by a side wall of the valve body; and
in a situation that the valve cover is in the second mounting position, the valve body air inlet path, the third valve cover passage, the valve body passage, the second valve cover passage, and the first valve body air outlet path may be in communication in sequence, the first port of the second valve cover passage may be configured to be blocked by the side wall of the valve body, the second port of the second valve cover passage may be configured to make the air outlet end of the valve body passage in communication with the air inlet end of the first valve body air outlet path, and two ports of the first valve cover passage may be configured to be blocked by the side wall of the valve body.

Optionally, the valve body may be provided thereon with a second valve body air outlet path, and an air inlet end of the second valve body air outlet path may be in communication with the valve body passage.

Optionally, the air inlet end of the first valve body air outlet path may be provided with a second shrinkage member, and the second shrinkage member may be configured to slow down the gas in the second port of the second valve cover passage from entering the first valve body air outlet path.

Optionally, an outer wall of the second shrinkage member and an inner wall of the air inlet end of the first valve body air outlet path may be fitted to each other, an inner wall of the second shrinkage member may define a second flow-limiting channel, the second flow-limiting channel may be configured to slow down the gas in the second port of the second valve cover passage from entering the first valve body air outlet path.

Optionally, an outer wall of the first shrinkage member and an inner wall of the first port may be fitted to each other, an inner wall of the first shrinkage member may define a first flow-limiting channel, and the first flow-limiting channel may be configured to slow down the gas in the valve body passage from entering the second valve cover passage.

Optionally, the second port of the second valve cover passage may be in a cavity structure.

Optionally, the structure of the first valve cover passage and the structure of the second valve cover passage may be the same.

Optionally, an air inlet direction of the valve body and an air outlet direction of the valve body may form an angle.

Optionally, a protective cover may be installed outside the valve cover.

An embodiment of the present invention further provides a braking system, wherein the braking system may include the above conversion device.

An embodiment of the present invention further provides a train, wherein the train may include a vehicle body and the above braking system, and the braking system may be mounted on the vehicle body.

The benefit effects of the conversion device, the braking system, and the train in the embodiments of the present invention at least include, for example:
the embodiments of the present invention provide a conversion device. The conversion device may include a valve body, a valve cover, and a first shrinkage member, the valve body may be provided with a valve body air inlet path, a first valve body air outlet path, and a valve body passage; and the valve cover may be rotatably mounted on the valve body. Rotatably mounting the valve cover on the valve body can reduce the used space, and is more compact and simple. In the above, the valve cover may be provided thereon with a first valve cover passage, a second valve cover passage, and a third valve cover passage; the first shrinkage member may be provided at a first port of the second valve cover passage; the valve cover may be configured to be rotatable relative to the valve body, so as to be switched between a first mounting position and a second mounting position, and to switch the valve cover between the first mounting position and the second mounting position in a rotating manner is also quite convenient. In a situation that the valve cover is in the first mounting position, the valve body air inlet path, the first valve cover passage, the valve body passage, the second valve cover passage, and the first valve body air outlet path may be in communication in sequence, a first port of the second valve cover passage may be in communication with an air outlet end of the valve body passage, a second port of the second valve cover passage may be in communication with an air inlet end of the first valve body air outlet path; the first shrinkage member may be configured to slow down a gas in the valve body passage from entering the second valve cover passage, and two ports of the third valve cover passage may be configured to be blocked by a side wall of the valve body, at this time, the first shrinkage member is also in the gas flow path, slowing down the velocity of the airflow. In a situation that the valve cover is in the second mounting position, the valve body air inlet path, the third valve cover passage, the valve body passage, the second valve cover passage, and the first valve body air outlet path may be in communication in sequence, the first port of the second valve cover passage may be configured to be blocked by the side wall of the valve body, the second port of the second valve cover passage may be configured to make the air outlet end of the valve body passage in communication with the air inlet end of the first valve body air outlet path, and two ports of the first valve cover passage may be configured to be blocked by the side wall of the valve body. In this case, since the first port of the second valve cover passage is configured to be blocked by the side wall of the valve body, the first shrinkage member is not in the gas flow path, increasing the velocity of the airflow.

The embodiments of the present invention further provide a braking system, wherein the braking system may include the above conversion device, which can make the structure compact and simple.

The embodiments of the present invention further provide a train, wherein the train may include a vehicle body and the above braking system, and the braking system may be mounted on the vehicle body, which can make the structure compact and simple.

### Brief Description of Drawings

In order to more clearly illustrate technical solutions of embodiments of the present invention, accompanying drawings which need to be used in the embodiments will be introduced briefly below, and it should be understood that the accompanying drawings below merely show some embodiments of the present invention, therefore, they should not be considered as limitation on the scope, and those ordinarily skilled in the art still could obtain other relevant accompanying drawings according to these accompanying drawings, without using any inventive efforts.
FIG. 1 is a structural schematic view of a conversion device provided in an embodiment of the present invention, with a valve cover being located in a first mounting position; and
FIG. 2 is a structural schematic view of the conversion device provided in the embodiment of the present invention, with the valve cover being located in a second mounting position.

Reference signs: 1000-conversion device; 100-valve body; 200-valve cover; 110-valve body air inlet path; 120-first valve body air outlet path; 130-valve body passage; 140-second valve body air outlet path; 210-first valve cover passage; 220-second valve cover passage; 221-first port; 222-second port; 230-third valve cover passage; 300-first shrinkage member; 310-first flow-limiting channel; 400-second shrinkage member; 410-second flow-limiting channel; Cv-airflow.

### Detailed Description of Embodiments

In order to make objectives, technical solutions, and advantages of the embodiments of the present invention clearer, the technical solutions in the embodiments of the present invention will be described clearly and completely below in conjunction with accompanying drawings in the embodiments of the present invention, and apparently, the embodiments described are some but not all embodiments of the present invention.

Generally, components in the embodiments of the present invention, as described and shown in the accompanying drawings herein, may be arranged and designed in various different configurations.

Therefore, the detailed description below of the embodiments of the present invention provided in the accompanying drawings is not intended to limit the scope of the present invention claimed, but merely illustrates chosen embodiments of the present invention.

All of other embodiments obtained by those ordinarily skilled in the art based on the embodiments in the present invention without using inventive efforts shall fall within the scope of protection of the present invention.

It should be noted that similar reference signs and letters represent similar items in the following accompanying drawings, therefore, once a certain item is defined in one accompanying drawing, it is not needed to be further defined or explained in subsequent accompanying drawings.

In the description of the present invention, it should be indicated that orientation or positional relationships indicated by terms such as "upper", "lower", "inner", and "outer", if appear, are based on orientation or positional relationships as shown in the drawings, or orientation or positional relationships of a product of the present invention when being conventionally placed in use, merely for facilitating describing the present invention and simplifying the description, rather than indicating or suggesting that related devices or elements have to be in the specific orientation or configured and operated in a specific orientation, therefore, they should not be construed as limiting the present invention.

Besides, terms such as "first" and "second", if appear, are merely for distinctive description, but should not be construed as indicating or implying importance in the relativity.

It should be indicated that the features in the embodiments of the present invention may be combined with each other if there is no conflict.

As one of the important transportation means in the transportation system, the trains play a great role. The speed of braking force output of the braking system of the trains is closely related to the braking demand of the trains, and meanwhile also will affect the running of the trains. Generally, a conversion device is added to the braking system so as to adjust the braking force output of the braking system.

For example, for long-marshalling and slow-speed freight trains, it requires a relatively long time for the braking wave to be transmitted from front vehicles to rear vehicles. Generally, the braking force output is required to be slow, in this way it can be ensured that all of the front vehicles, middle vehicles, and rear vehicles of the marshalling train may be subjected to different degrees of braking force, and the longitudinal impulse of the train may be effectively reduced. If the braking system output is faster, when the vehicles of the marshalling train near the front have output the braking force, the braking force of the vehicles of the marshalling train near the back have not been output yet, this will cause a very large longitudinal impulse of the train, and will cause derailment of the vehicles in the most severe case.

For short-marshalling and fast-speed express trains, it requires a short time for the braking wave to be transmitted from the front vehicles to the rear vehicles. Generally, the braking force is required to be output fast, in this way it ensures fast braking of the marshalling train, allowing the front and rear braking actions of the vehicles of the train to be consistent, effectively reducing the longitudinal impulse of the train, also greatly shortening an idling distance of the marshalling train, releasing a space of effective braking distance, and ensuring traveling safety of the vehicles.

When heading for other destinations to load goods in an empty state, the express train usually will be mixed with long-marshalling train, then the problem of inconsistent braking force output will be highlighted. When the number of marshalling of the express train is large, the running of the train will be severely affected, therefore, a conversion device needs to be added to the braking system so as to adjust the braking force output of the braking system.

In the prior art, the structure of the conversion device of the braking system of the train system is relatively complex.

In view of this, a conversion device, a braking system, and a train provided in the embodiments of the present invention at least may solve this problem.

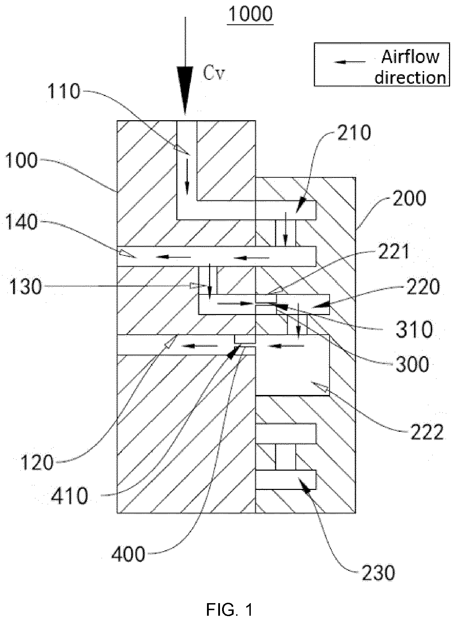

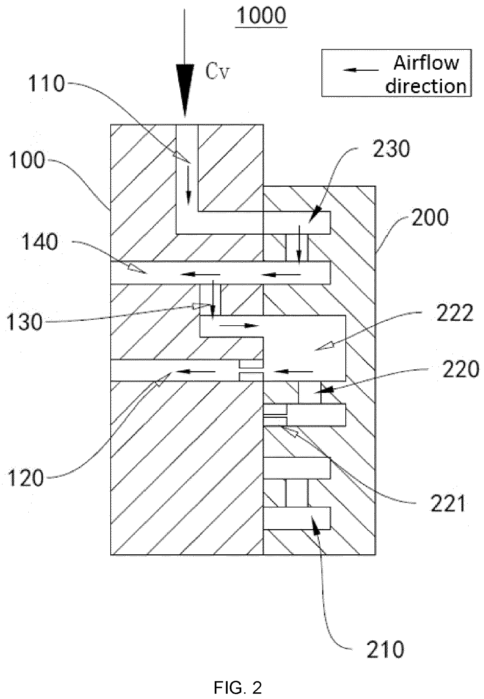

Referring to FIG. 1 to FIG. 2, the present embodiment provides a conversion device 1000, a braking system, and a train, which will be described in detail below.

An embodiment of the present invention provides a train (not shown). The train may include a vehicle body (not shown) and a braking system (not shown), wherein the braking system may be mounted on the vehicle body. In the above, the braking system may include a conversion device 1000, and in the braking system, an airflow Cv needs to be input into the conversion device 1000, the conversion device 1000 can change an output flow rate of the airflow Cv, and further control the speed of power output, and when the airflow Cv output by the conversion device 1000 is relatively slow, the braking output force of the braking system is relatively small, and when the airflow Cv output by the conversion device 1000 is relatively fast, the braking output force of the braking system is relatively large.

In the above, the conversion device 1000 may include a valve body 100, a valve cover 200, and a first shrinkage (hole-reducing) member 300, the valve body 100 may be provided thereon with a valve body air inlet path 110, a first valve body air outlet path 120, and a valve body passage 130, and the valve cover 200 may be rotatably mounted on the valve body 100. It may be understood that rotatably mounting the valve cover 200 on the valve body 100 can reduce the used space, and is more compact and simple. Certainly, in other embodiments, a protective cover further may be installed outside the valve cover 200, in turn, misoperation of personnel may be avoided.

In the above, the valve cover 200 may be provided thereon with a first valve cover passage 210, a second valve cover passage 220, and a third valve cover passage 230; in the present embodiment, the structure of the first valve cover passage 210 and the structure of the second valve cover passage 220 may be the same. The first shrinkage member 300 may be provided at a first port 221 of the second valve cover passage 220; the valve cover 200 may be configured to be rotatable relative to the valve body 100, so as to be switched between a first mounting position and a second mounting position, and the switching between the first mounting position and the second mounting position in a rotating manner is also quite convenient. Specifically, the second mounting position may be that the valve cover is rotated 180 degrees clockwise or 180 degrees counterclockwise with respect to the valve body 100 when the valve cover 200 is in the first mounting position.

In the situation that the valve cover 200 is in the first mounting position, the valve body air inlet path 110, the first valve cover passage 210, the valve body passage 130, the second valve cover passage 220, and the first valve body air outlet path 120 may be in communication in sequence, a first port 221 of the second valve cover passage 220 may be in communication with an air outlet end of the valve body passage 130, a second port 222 of the second valve cover passage 220 may be in communication with an air (gas) inlet end of the first valve body air outlet path 120, the first shrinkage member 300 may be configured to slow down the gas in the valve body passage 130 from entering the second valve cover passage 220, two ports of the third valve cover passage 230 may be configured to be blocked by a side wall of the valve body 100, and at this time, the first shrinkage member 300 is also in a gas flow path, slowing down the velocity of the airflow Cv.

In the situation that the valve cover 200 is in the second mounting position, the valve body air inlet path 110, the third valve cover passage 230, the valve body passage 130, the second valve cover passage 220, and the first valve body air outlet path may be in communication in sequence, the first port 221 of the second valve cover passage 220 may be configured to be blocked by the side wall of the valve body 100, the second port 222 of the second valve cover passage 220 may be configured to make the air outlet end of the valve body passage 130 in communication with the air inlet end of the first valve body air outlet path 120, two ports of the first valve cover passage 210 may be configured to be blocked by the side wall of the valve body 100. In this case, since the first port 221 of the second valve cover passage 220 is configured to be blocked by the side wall of the valve body 100, the first shrinkage member 300 is not in the gas flow path, increasing the velocity of the airflow Cv, that is, the first shrinkage member 300 is also blocked by the side wall of the valve body 100, and it should be noted that the first shrinkage member 300 may be integrally molded with the valve cover 200.

In the present embodiment, an air inlet direction of the valve body 100 and an air outlet direction of the valve body 100 may form an angle, and specifically, the air inlet direction of the valve body 100 and the air outlet direction of the valve body 100 may be perpendicular to each other.

In the above, the valve body 100 may be provided thereon with a second valve body air outlet path 140, and an air inlet end of the second valve body air outlet path 140 may be in communication with the valve body passage 130. It may be understood that, in this case, the airflow Cv may flow out simultaneously from the first valve body air outlet path 120 and the second valve body air outlet path 140.

The air inlet end of the first valve body air outlet path 120 may be provided with a second shrinkage member 400, and the second shrinkage member 400 may be configured to slow down the gas in the second port 222 of the second valve cover passage 220 from entering the first valve body air outlet path 120. It may be understood that the second shrinkage member 400 may be integrally molded with the valve body 100, and at this time, in the first mounting position, the airflow Cv in the conversion device 1000 may pass through the first shrinkage member 300 and the second shrinkage member 400 and then flow out from the air outlet end of the first valve body air outlet path 120.

An outer wall of the second shrinkage member 400 and an inner wall of the air inlet end of the first valve body air outlet path 120 may be fitted to each other, and an inner wall of the second shrinkage member 400 may define a second flow-limiting channel 410, the second flow-limiting channel 410 may be configured to slow down the gas in the second port 222 of the second valve cover passage 220 from entering the first valve body air outlet path 120, an outer wall of the first shrinkage member 300 and an inner wall of the first port 221 may be fitted to each other, an inner wall of the first shrinkage member 300 may define a first flow-limiting channel 310, and the first flow-limiting channel 310 may be configured to slow down the gas in the valve body passage 130 from entering the second valve cover passage 220.

In the above, the second port 222 of the second valve cover passage 220 may be in a cavity structure. It may be understood that, when the airflow Cv enters the second valve cover passage 220 and then enters the second port 222, the resistance for the airflow Cv will change, and specifically, the resistance for the airflow Cv may be reduced.

The conversion device 1000 may include the valve body 100, the valve cover 200, and the first shrinkage member 300, the valve body 100 may be provided thereon with the valve body air inlet path 110, the first valve body air outlet path 120, and the valve body passage 130; and the valve cover 200 may be rotatably mounted on the valve body 100. Rotatably mounting the valve cover 200 on the valve body 100 can reduce the used space, and is more compact and simple.

In the above, the valve cover 200 may be provided thereon with the first valve cover passage 210, the second valve cover passage 220, and the third valve cover passage 230; the first shrinkage member 300 may be provided at the first port 221 of the second valve cover passage 220; the valve cover 200 may be configured to be rotatable relative to the valve body 100, so as to be switched between a first mounting position and a second mounting position, and the switching between the first mounting position and the second mounting position in a rotating manner is quite convenient.

In the situation that the valve cover 200 is in the first mounting position, the valve body air inlet path 110, the first valve cover passage 210, the valve body passage 130, the second valve cover passage 220, and the first valve body air outlet path 120 may be in communication in sequence, the first port 221 of the second valve cover passage 220 may be in communication with the air outlet end of the valve body passage 130, the second port 222 of the second valve cover passage 220 may be in communication with the air inlet end of the first valve body air outlet path 120; the first shrinkage member 300 may be configured to slow down the gas in the valve body passage 130 from entering the second valve cover passage 220, two ports of the third valve cover passage 230 may be configured to be blocked by the side wall of the valve body 100, and at this time, the first shrinkage member 300 is also in the gas flow path, slowing down the velocity of the airflow Cv.

In the situation that the valve cover 200 is in the second mounting position, the valve body air inlet path 110, the third valve cover passage 230, the valve body passage 130, the second valve cover passage 220, and the first valve body air outlet path 120 may be in communication in sequence, the first port 221 of the second valve cover passage 220 may be configured to be blocked by the side wall of the valve body 100, the second port 222 of the second valve cover passage 220 may be configured to make the air outlet end of the valve body passage 130 in communication with the air inlet end of the first valve body air outlet path 120, two ports of the first valve cover passage 210 may be configured to be blocked by the side wall of the valve body 100. In this case, since the first port 221 of the second valve cover passage 220 is configured to be blocked by the side wall of the valve body 100, the first shrinkage member 300 is also blocked by the side wall of the valve body 100, and will not hinder the flow of the airflow Cv, increasing the velocity of the airflow Cv.

The braking system may include the above conversion device 1000, which can make the structure compact and simple.

The train may include a vehicle body and the above braking system, and the braking system may be mounted on the vehicle body, which can make the structure compact and simple.

The above-mentioned are merely specific embodiments of the present invention, but the scope of protection of the present invention is not limited thereto, and any modification or substitution that may be easily envisaged by those skilled in the present technical field within the technical scope disclosed in the present invention should fall within the scope of protection of the present invention.

Therefore, the scope of protection of the present invention should be determined by the scope of protection of the appended claims.

### Industrial Applicability

Embodiments of the present invention provide a conversion device, a braking system, and a train, relating to the field of trains. The conversion device includes a valve body, a valve cover, and a first shrinkage member, the valve body is provided with a valve body air inlet path, a first valve body air outlet path, and a valve body passage; the valve cover is rotatably mounted on the valve body, the valve cover is provided with a first valve cover passage, a second valve cover passage, and a third valve cover passage; the first shrinkage member is provided at a first port of the second valve cover passage; the valve cover is configured to be rotatable relative to the valve body, so as to be switched between a first mounting position and a second mounting position. Rotatably mounting the valve cover on the valve body can reduce the used space, and is more compact and simple.

Besides, it may be understood that the valve body, the valve cover, the first shrinkage member, the conversion device, and the braking system in the present invention may be reproduced, and may be applied in a variety of industrial applications. For example, the valve body, the valve cover, the first shrinkage member, the conversion device, and the braking system in the present invention may be applied to transportation tools, such as trains.

## Claims

1. A conversion device (1000), comprising:
a vehicle body (100), wherein the valve body (100) is provided with a valve body air inlet path (110), a first valve body air outlet path (120), and a valve body passage (130);
a valve cover (200), wherein the valve cover (200) is rotatably mounted on the valve body (100); and the valve cover (200) is provided with a first valve cover passage (210), a second valve cover passage (220), and a third valve cover passage (230); and
a first shrinkage member (300), wherein the first shrinkage member (300) is provided at a first port (221) of the second valve cover passage (220),
the valve cover (200) is configured to be rotatable relative to the valve body (100), so as to be switched between a first mounting position and a second mounting position, wherein
in a situation that the valve cover (200) is in the first mounting position, the valve body air inlet path (110), the first valve cover passage (210), the valve body passage (130), the second valve cover passage (220), and the first valve body air outlet path (120) are in communication with each other in sequence, a first port (221) of the second valve cover passage (220) is in communication with an air outlet end of the valve body passage (130), a second port (222) of the second valve cover passage (220) is in communication with an air inlet end of the first valve body air outlet path (120); the first shrinkage member (300) is configured to slow down a gas in the valve body passage (130) entering the second valve cover passage (220), and two ports of the third valve cover passage (230) are configured to be blocked by a side wall of the valve body (100); and
in a situation that the valve cover (200) is in the second mounting position, the valve body air inlet path (110), the third valve cover passage (230), the valve body passage (130), the second valve cover passage (220), and the first valve body air outlet path (120) are in communication with each other in sequence, the first port (221) of the second valve cover passage (220) is configured to be blocked by the side wall of the valve body (100), the second port (222) of the second valve cover passage (220) is configured to make the air outlet end of the valve body passage (130) in communication with the air inlet end of the first valve body air outlet path (120), and two ports of the first valve cover passage (210) are configured to be blocked by the side wall of the valve body (100).

2. The conversion device (1000) according to claim 1, wherein the valve body (100) is provided with a second valve body air outlet path (140), and an air inlet end of the second valve body air outlet path (140) is in communication with the valve body passage (130).

3. The conversion device (1000) according to claim 1 or 2, wherein the air inlet end of the first valve body air outlet path (120) is provided with a second shrinkage member (400), and the second shrinkage member (400) is configured to slow down gas in the second port (222) of the second valve cover passage (220) entering the first valve body air outlet path (120).

4. The conversion device (1000) according to claim 3, wherein an outer wall of the second shrinkage member (400) and an inner wall of the air inlet end of the first valve body air outlet path (120) are fitted to each other, an inner wall of the second shrinkage member (400) defines a second flow-limiting channel (410), wherein the second flow-limiting channel (410) is configured to slow down the gas in the second port (222) of the second valve cover passage (220) entering the first valve body air outlet path (120).

5. The conversion device (1000) according to any one of claims 1 to 4, wherein an outer wall of the first shrinkage member (300) and an inner wall of the first port (221) are fitted to each other, an inner wall of the first shrinkage member (300) defines a first flow-limiting channel (310), and the first flow-limiting channel (310) is configured to slow down the gas in the valve body passage (130) entering the second valve cover passage (220).

6. The conversion device (1000) according to any one of claims 1 to 5, wherein the second port (222) of the second valve cover passage (220) is in a cavity structure.

7. The conversion device (1000) according to any one of claims 1 to 6, wherein structure of the first valve cover passage (210) and structure of the second valve cover passage (220) are the same.

8. The conversion device (1000) according to any one of claims 1 to 7, wherein an air inlet direction of the valve body (100) and an air outlet direction of the valve body (100) form an angle therebetween.

9. The conversion device (1000) according to any one of claims 1 to 8, wherein a protective cover is installed outside the valve cover (200).

10. A braking system, comprising the conversion device (1000) according to any one of claims 1-9.

11. A train, comprising a vehicle body and the braking system according to claim 10, wherein the braking system is mounted on the vehicle body.

## Patentansprüche

1. Umwandlungsvorrichtung (1000), umfassend:
einen Fahrzeugkörper (100), wobei der Ventilkörper (100) mit einem Ventilkörper-Lufteinlassweg (110), einem ersten Ventilkörper-Luftauslassweg (120) und einem Ventilkörperkanal (130) versehen ist;
eine Ventilabdeckung (200), wobei die Ventilabdeckung (200) am Ventilkörper (100) drehbar montiert ist; und die Ventilabdeckung (200) mit einem ersten Ventilabdeckungskanal (210), einem zweiten Ventilabdeckungskanal (220) und einem dritten Ventilabdeckungskanal (230) versehen ist; und
ein erstes Schrumpfelement (300), wobei das erste Schrumpfelement (300) an einer ersten Öffnung (221) des zweiten Ventilabdeckungskanals (220) vorgesehen ist,
wobei die Ventilabdeckung (200) zum Umschalten zwischen einer ersten Einbauposition und einer zweiten Einbauposition relativ zum Ventilkörper (100) drehbar konfiguriert ist, wobei
in einer Situation, in der sich die Ventilabdeckung (200) in der ersten Einbauposition befindet, der Ventilkörper-Lufteinlassweg (110), der erste Ventilabdeckungskanal (210), der Ventilkörperkanal (130), der zweite Ventilabdeckungskanal (220) und der erste Ventilkörper-Luftauslassweg (120) nacheinander miteinander in Verbindung stehen, eine erste Öffnung (221) des zweiten Ventilabdeckungskanals (220) mit einem Luftauslassende des Ventilkörperkanals (130) in Verbindung steht, eine zweite Öffnung (222) des zweiten Ventilabdeckungskanals (220) mit einem Lufteinlassende des ersten Ventilkörper-Luftauslasswegs (120) in Verbindung steht; das erste Schrumpfelement (300) zum Verlangsamen eines Gases im Ventilkörperkanal (130), das in den zweiten Ventilabdeckungskanal (220) eintritt, konfiguriert ist, und zwei Öffnungen des dritten Ventilabdeckungskanals (230) zum Blockieren durch eine Seitenwand des Ventilkörpers (100) konfiguriert sind; und
in einer Situation, in der sich die Ventilabdeckung (200) in der zweiten Einbauposition befindet, der Ventilkörper-Lufteinlassweg (110), der dritte Ventilabdeckungskanal (230), der Ventilkörperkanal (130), der zweite Ventilabdeckungskanal (220) und der erste Ventilkörper-Luftauslassweg (120) nacheinander miteinander in Verbindung stehen, die erste Öffnung (221) des zweiten Ventilabdeckungskanals (220) zum Blockieren durch die Seitenwand des Ventilkörpers (100) konfiguriert ist, die zweite Öffnung (222) des zweiten Ventilabdeckungskanals (220) zum Herstellen einer Verbindung des Luftauslassende des Ventilkörperkanals (130) mit dem Lufteinlassende des ersten Ventilkörper-Luftauslasswegs (120) konfiguriert ist, und zwei Öffnungen des ersten Ventilabdeckungskanals (210) zum Blockieren durch die Seitenwand des Ventilkörpers (100) konfiguriert sind.

2. Umwandlungsvorrichtung (1000) nach Anspruch 1, wobei der Ventilkörper (100) mit einem zweiten Ventilkörper-Luftauslassweg (140) versehen ist und ein Lufteinlassende des zweiten Ventilkörper-Luftauslasswegs (140) mit dem Ventilkörperkanal (130) in Verbindung steht.

3. Umwandlungsvorrichtung (1000) nach Anspruch 1 oder 2, wobei das Lufteinlassende des ersten Ventilkörper-Luftauslasswegs (120) mit einem zweiten Schrumpfelement (400) versehen ist und das zweite Schrumpfelement (400) zum Verlangsamen eines Gases in der zweiten Öffnung (222) des zweiten Ventilabdeckungskanals (220), das in den ersten Ventilkörper-Luftauslassweg (120) eintritt, konfiguriert ist.

4. Umwandlungsvorrichtung (1000) nach Anspruch 3, wobei eine Außenwand des zweiten Schrumpfelements (400) und eine Innenwand des Lufteinlassendes des ersten Ventilkörper-Luftauslasswegs (120) aneinander angepasst sind, eine Innenwand des zweiten Schrumpfelements (400) einen zweiten Strömungsbegrenzungskanal (410) definiert, wobei der zweite Strömungsbegrenzungskanal (410) zum Verlangsamen des Gases in der zweiten Öffnung (222) des zweiten Ventilabdeckungskanals (220), das in den ersten Ventilkörper-Luftauslassweg (120) eintritt, konfiguriert ist.

5. Umwandlungsvorrichtung (1000) nach einem der Ansprüche 1 bis 4, wobei eine Außenwand des ersten Schrumpfelements (300) und eine Innenwand der ersten Öffnung (221) aneinander angepasst sind, eine Innenwand des ersten Schrumpfelements (300) einen ersten Strömungsbegrenzungskanal (310) definiert und der erste Strömungsbegrenzungskanal (310) zum Verlangsamen des Gases im Ventilkörperkanal (130), das in den zweiten Ventilabdeckungskanal (220) eintritt, konfiguriert ist.

6. Umwandlungsvorrichtung (1000) nach einem der Ansprüche 1 bis 5, wobei die zweite Öffnung (222) des zweiten Ventilabdeckungskanals (220) in einer Hohlraumstruktur angeordnet ist.

7. Umwandlungsvorrichtung (1000) nach einem der Ansprüche 1 bis 6, wobei die Struktur des ersten Ventilabdeckungskanals (210) und die Struktur des zweiten Ventilabdeckungskanals (220) identisch sind.

8. Umwandlungsvorrichtung (1000) nach einem der Ansprüche 1 bis 7, wobei eine Lufteinlassrichtung des Ventilkörpers (100) und eine Luftauslassrichtung des Ventilkörpers (100) einen Winkel dazwischen bilden.

9. Umwandlungsvorrichtung (1000) nach einem der Ansprüche 1 bis 8, wobei eine Schutzabdeckung außerhalb der Ventilabdeckung (200) angebracht ist.

10. Bremssystem, umfassend die Umwandlungsvorrichtung (1000) nach einem der Ansprüche 1-9.

11. Zug, umfassend einen Fahrzeugaufbau und das Bremssystem nach Anspruch 10, wobei das Bremssystem am Fahrzeugaufbau montiert ist.

## Revendications

1. Dispositif de conversion (1000) comprenant :
un corps de véhicule (100), dans lequel le corps de soupape (100) est prévu avec une trajectoire d'entrée d'air de corps de soupape (110), une première trajectoire de sortie d'air de corps de soupape (120), et un passage de corps de soupape (130) ;
un couvercle de soupape (200), dans lequel le couvercle de soupape (200) est monté, de manière rotative, sur le corps de soupape (100) ; et le couvercle de soupape (200) est prévu avec un premier passage de couvercle de soupape (210), un deuxième passage de couvercle de soupape (220) et un troisième passage de couvercle de soupape (230) ; et
un premier élément de retrait (300), dans lequel le premier élément de retrait (300) est prévu au niveau d'un premier orifice (221) du deuxième passage de couvercle de soupape (220),
le couvercle de soupape (200) est configuré pour pouvoir tourner par rapport au corps de soupape (100), afin d'être commuté entre une première position de montage et une seconde position de montage, dans lequel :
dans une situation dans laquelle le couvercle de soupape (200) est dans la première position de montage, la trajectoire d'entrée d'air de corps de soupape (110), le premier passage de couvercle de soupape (210), le passage de corps de soupape (130), le deuxième passage de couvercle de soupape (220) et la première trajectoire de sortie d'air de corps de soupape (120) sont en communication entre eux, en séquence, un premier orifice (221) du deuxième passage de couvercle de soupape (220) est en communication avec une extrémité de sortie d'air du passage de corps de soupape (130), un second orifice (222) du deuxième passage de couvercle de soupape (220) est en communication avec une extrémité d'entrée d'air de la première trajectoire de sortie d'air de corps de soupape (120) ; le premier élément de retrait (300) est configuré pour ralentir un gaz dans le passage de corps de soupape (130) qui entre dans le deuxième passage de couvercle de soupape (220), et deux orifices du troisième passage de couvercle de soupape (230) sont configurés pour être bloqués par une paroi latérale du corps de soupape (100) ; et
dans une situation dans laquelle le couvercle de soupape (200) est dans la seconde position de montage, la trajectoire d'entrée d'air de corps de soupape (110), le troisième passage de couvercle de soupape (230), le passage de corps de soupape (130), le deuxième passage de couvercle de soupape (220), et la première trajectoire de sortie d'air de corps de soupape (120) sont en communication entre eux, en séquence, le premier orifice (221) du deuxième passage de couvercle de soupape (220) est configuré pour être bloqué par la paroi latérale du corps de soupape (100), le second orifice (222) du deuxième passage de couvercle de soupape (220) est configuré pour mettre l'extrémité de sortie d'air du passage de corps de soupape (130) en communication avec l'extrémité d'entrée d'air de la première trajectoire de sortie d'air de corps de soupape (120), et deux orifices du premier passage de couvercle de soupape (210) sont configurés pour être bloqués par la paroi latérale du corps de soupape (100).

2. Dispositif de conversion (1000) selon la revendication 1, dans lequel le corps de soupape (100) est prévu avec une seconde trajectoire de sortie d'air de corps de soupape (140), et une extrémité d'entrée d'air de la seconde trajectoire de sortie d'air de corps de soupape (140) est en communication avec le passage de corps de soupape (130).

3. Dispositif de conversion (1000) selon la revendication 1 ou 2, dans lequel l'extrémité d'entrée d'air de la première trajectoire de sortie d'air de corps de soupape (120) est prévue avec un second élément de retrait (400), et le second élément de retrait (400) est configuré pour ralentir le gaz dans le second orifice (222) du deuxième passage de couvercle de soupape (220) qui entre dans la première trajectoire de sortie d'air de corps de soupape (120).

4. Dispositif de conversion (1000) selon la revendication 3, dans lequel une paroi externe du second élément de retrait (400) et une paroi interne de l'extrémité d'entrée d'air de la première trajectoire de sortie d'air de corps de soupape (120) sont ajustées l'une par rapport à l'autre, une paroi interne du second élément de retrait (400) définit un second canal de limitation d'écoulement (410), dans lequel le second canal de limitation d'écoulement (410) est configuré pour ralentir le gaz dans le second orifice (222) du deuxième passage de couvercle de soupape (220) qui entre dans la première trajectoire de sortie d'air de corps de soupape (120).

5. Dispositif de conversion (1000) selon l'une quelconque des revendications 1 à 4, dans lequel une paroi externe du premier élément de retrait (300) et une paroi interne du premier orifice (221) sont ajustées l'une par rapport à l'autre, une paroi interne du premier élément de retrait (300) définit un premier canal de limitation d'écoulement (310), et le premier canal de limitation d'écoulement (310) est configuré pour ralentir le gaz dans le passage de corps de soupape (130) qui entre dans le deuxième passage de couvercle de soupape (220).

6. Dispositif de conversion (1000) selon l'une quelconque des revendications 1 à 5, dans lequel le second orifice (222) du deuxième passage de couvercle de soupape (220) est dans une structure de cavité.

7. Dispositif de conversion (1000) selon l'une quelconque des revendications 1 à 6, dans lequel la structure du premier passage de couvercle de soupape (210) et la structure du deuxième passage de couvercle de soupape (220) sont les mêmes.

8. Dispositif de conversion (1000) selon l'une quelconque des revendications 1 à 7, dans lequel une direction d'entrée d'air du corps de soupape (100) et une direction de sortie d'air du corps de soupape (100) forment un angle entre elles.

9. Dispositif de conversion (1000) selon l'une quelconque des revendications 1 à 8, dans lequel un couvercle de protection est installé à l'extérieur du couvercle de soupape (200).

10. Système de freinage comprenant le dispositif de conversion (1000) selon l'une quelconque des revendications 1 à 9.

11. Train comprenant un corps de véhicule et le système de freinage selon la revendication 10, dans lequel le système de freinage est monté sur le corps de véhicule.
